# EUROPÄISCHE PATENTSCHRIFT

(11) **EP 3 575 457 B1**
(45) Veröffentlichungstag und Bekanntmachung des Hinweises auf die Patenterteilung: **15.03.2023**
(21) Anmeldenummer: 19175519.8
(22) Anmeldetag: 21.05.2019
(51) Int. Cl.: D01H 4/48, B65H 63/00, D01H 1/20, D01H 4/42, D01H 13/32

(54) **VERFAHREN ZUM ERMITTELN VON BETRIEBSZUSTÄNDEN EINER TEXTILMASCHINE SOWIE EINE TEXTILMASCHINE**
METHOD FOR DETERMINING THE OPERATING CONDITIONS OF A TEXTILE MACHINE AND TEXTILE MACHINE
PROCÉDÉ DE DÉTERMINATION DES ÉTATS DE FONCTIONNEMENT D'UNE MACHINE TEXTILE AINSI QUE MACHINE TEXTILE

(30) Priorität: 29.05.2018 DE 102018112797
(43) Veröffentlichungstag der Anmeldung: 04.12.2019
(73) Patentinhaber: Maschinenfabrik Rieter AG, 8406 Winterthur (CH)
(72) Erfinder: MALECK, Mario, 85137 Walting (DE); WEIN, Robin, 85051 Ingolstadt (DE)
(74) Vertreter: Canzler & Bergmeier Patentanwälte Partnerschaft mbB

(56) Entgegenhaltungen:
- WO-A1-03/033786
- DE-A1- 2 950 063
- DE-A1- 4 228 300
- DE-A1- 4 404 243
- DE-A1-102010 009 164

## Beschreibung

Die vorliegende Erfindung betrifft ein Verfahren zum Ermitteln eines Funktionsstatus an einer Arbeitsstellen einer Textilmaschine, insbesondere einer Offenend- oder Luftspinnmaschine, wobei die Textilmaschine eine Vielzahl an Arbeitsstellen umfasst, und wobei jeweils eine Arbeitsstelle zumindest einen Antrieb umfasst, mit dessen Hilfe ein dem Antrieb zugeordnetes Behandlungsmittel der jeweiligen Arbeitsstelle zum Behandeln eines Fasermaterials betrieben wird. Des Weiteren betrifft die Erfindung eine Textilmaschine zum Durchführen eines Verfahrens zum Ermitteln des Funktionsstatus an einer Arbeitsstelle.

Aus der EP 2 309 043 A1 ist eine Spinnereimaschine mit mindestens einem Sensor bekannt, der einen Betriebszustand der Spinnereimaschine abfühlt und ein diesen Betriebszustand charakterisierendes Signal abgibt. Ferner ist mindestens ein Aktor vorgesehen, dem dieses Signal zugeleitet wird und der nach Maßgabe dieses Signals eine Maßnahme einleitet. Allerdings ist die Messung des Betriebszustandes mittels des Sensors nachteilig, da dieser ein zusätzliches, kostenverursachendes, Bauteil darstellt.

Aus der DE 29 50 063 A1 ist eine Überwachungsschaltung zum Erfassen von Betriebsstörungen bei einer Textilmaschine bekannt, die mindestens eine Vielzahl von Arbeitsorganen aufweisende Arbeitsorgangruppe aufweist, deren Arbeitsorgane je einer Arbeitsstelle zugeordnet und unter sich gleich sind und durch je einen Einzelantrieb mit je einem Elektromotor antreibbar sind. Die Betriebsstörungen werden dabei dadurch erfasst, dass eine Phasenlage eines Motorstroms mit einem Bezugssignal verglichen wird. Das Bezugssignal gilt dabei für die Vielzahl an Einzelantrieben gleichermaßen.

Aus der DE 42 28 300 A1 ist ein Verfahren zur Überwachung von Spinnstellen einer Spinnmaschine, insbesondere einer Ringspinnmaschine, bekannt. An den Spinnstellen sind Spindeln angeordnet, auf die das produzierte Garn aufgewickelt wird. Das Verfahren ist dadurch gekennzeichnet, dass während der Anlaufphase, der Betriebsphase und der Auslaufphase zumindest eines die Spindeln antreibenden Motors mindestens an einem Teil der Spinnstelle zumindest zeitweise unmittelbar die Drehzahl der Spindel oder die Leistungsaufnahme des Spindelmotors als repräsentativer Istwert ermittelt wird. Dieser Istwert wird jeweils mit einem vorgebbaren, gemäß einem vorgegebenen Drehzahlprogramm zeitlich variabler Sollwert verglichen. Bei Abweichung des Istwerts vom Sollwert und einen vorgegebenen oberen Schwellenwert nach oben oder einen vorgegebenen unteren Schwellenwert nach unten wird abhängig von der Art der Abweichung eine Klassifizierung der Störung im einen Fall als Fadenbruch oder Schnelllauf bzw. im anderen Fall als Schleichlauf vorgenommen und ein entsprechendes Alarmsignal ausgelöst.

Aus der DE 44 04 243 A1 ist ein Verfahren und eine Einrichtung zum Betreiben einer Offenend-Rotorspinneinheit mit einzelmotorischem elektrischem Antrieb des Spinnrotors bekannt. Die dem Antrieb zugeführte elektrische Energie wird überwacht. Der Istwertverlauf einer die Energiezufuhr repräsentierenden Größe wird mit dem der jeweiligen Betriebsphase zugeordneten Sollwertverlauf verglichen. Bei Überschreiten von Grenzwerten der Abweichung der Istwerte dieser die Energiezufuhr repräsentierenden Größe von deren Sollwerten wird der Antrieb abgeschaltet. Bei einem Grenzwert kann es sich um einen Maximalwert handeln, dessen kurzzeitiges Überschreiten zum Abschalten führt. Allerdings kann es sich auch um einen darunterliegenden Wert handeln, dessen Überschreiten während einer festlegbaren Zeitdauer ebenfalls zum Abschalten führt. Bei transienten Motorzuständen wird vorteilhaft die Überwachung durch Integralbildung mit zunehmendem Integrationsbereich vom Startpunkt an realisiert. Zusätzlich zum Abschalten des Antriebes kann in Abhängigkeit von verschiedenen Bedingungen ein Alarmsignal generiert werden. Als die Energiezufuhr repräsentierende Größe ist vorteilhaft die Stromaufnahme einzusetzen, die sehr deutlich die störungsbedingte von Sollwerten abweichende Lastzunahme beim Rotorantrieb kennzeichnet.

Aus der DE 10 2010 009 164 A1 ist ein Verfahren und Vorrichtung zum Steuern einer Textilmaschine oder eines angetriebenen Teils einer Textilmaschine bekannt. Beim Verfahren zum Erkennen des Betriebszustandes einer Textilmaschine oder eines angetriebenen Teiles einer Textilmaschine, insbesondere einer Spinnmaschine bzw. Spinnstelle, wobei ein bewegliches Teil der Textilmaschine von einem Elektromotor direkt oder über eine mechanische Schnittstelle angetrieben wird, wobei dieser mittels einer Stelleinheit angesteuert wird, und dass mindestens ein Betriebsparameter des Elektromotors und/oder der Stelleinheit gemessen und ausgewertet wird dahingehend, dass mindestens eine anlagenbezogene oder motorabnutzungsbezogene Zustandsgröße ermittelt wird.

Aufgabe der vorliegenden Erfindung ist es somit, den Nachteil des Stands der Technik zu beheben.

Die Aufgabe wird gelöst durch ein Verfahren zum Ermitteln eines Funktionsstatus an einer Arbeitsstelle einer Textilmaschine sowie einer Textilmaschine mit den Merkmalen der unabhängigen Patentansprüche.

Vorgeschlagen wird ein Verfahren zum Ermitteln eines Funktionsstatus an einer Arbeitsstelle einer Textilmaschine. Bei der Textilmaschine kann es sich beispielsweise um eine Offenendspinnmaschine oder eine Luftspinnmaschine handeln. Der Funktionsstatus an der Arbeitsstelle kann beispielsweise ein Verschleiß, eine Fehlfunktion, eine Blockierung, eine Ausfallwahrscheinlichkeit, eine Produktivität und/oder eine Lebensdauer sein. Beispielsweise kann die Blockierung zwischen beweglichen Komponenten der Arbeitsstelle auftreten. Ebenso kann der Funktionsstatus ein Betriebszustand eines Behandlungsmittels sein.

Die Textilmaschine umfasst außerdem eine Vielzahl an Arbeitsstellen, so dass die Produktivität der Textilmaschine gemäß der Anzahl an Arbeitsstellen vervielfacht ist.

Jeweils eine Arbeitsstelle weist ferner zumindest einen Antrieb auf, mit dessen Hilfe zumindest ein dem Antrieb zugeordnetes Behandlungsmittel der jeweiligen Arbeitsstelle zum Behandeln eines Fasermaterials betrieben wird. Die Behandlungsmittel behandeln das Fasermaterial auf eine Weise, dass die Arbeitsstelle ihr End- oder Zwischenprodukt herstellen kann. Die Behandlungsmittel können dabei Baueinheiten, Hilfsmittel und/oder Vorrichtungen sein, die das Fasermaterial verarbeiten oder weiterleiten. Beispielsweise kann die Arbeitsstelle eine Karde sein, die ungerichtete einzelne Fasern zu einem Faservlies verarbeiten kann. Das Behandlungsmittel kann in diesem Fall beispielsweise eine Walze sein, die vom Antrieb in Drehung gesetzt wird, um die ungerichteten Fasern auszurichten.

Das Fasermaterial kann aber auch ein Faserband sein, das in einer Spinnstelle zuerst von einem Behandlungsmittel, beispielsweise einer Auflöseeinheit, in einzelne Fasern aufgelöst wird, welche anschließend von einem Behandlungsmittel in Gestalt eines Spinnrotors zu einem Garn versponnen werden. Der Antrieb kann dabei die Auflöseeinheit oder den Spinnrotor antreiben.

Die Arbeitsstelle kann aber auch eine Umspuleinheit sein, mittels der ein Garn von einer Spule auf eine andere Spule umgespult wird.

Erfindungsgemäß wird anhand einer Messung einer Lastgröße des zumindest einen Antriebs zumindest der Funktionsstatus zumindest eines Behandlungsmittels ermittelt. Zusätzlich oder alternativ kann auch ein Funktionsstatus eines Antriebs ermittelt werden. Zusätzlich oder alternativ kann aus dem Funktionsstatus des Behandlungsmittels und/oder des Antriebs auf einen Funktionsstatus der Arbeitsstelle geschlossen werden. Bei einem Funktionsstatus, der beispielsweise angibt, dass ein Spinnrotor nicht zu 100% funktionsfähig ist, ist der Funktionsstatus der Arbeitsstelle ebenfalls eingeschränkt. Ist der Funktionsstatus ein Betriebszustand eines Behandlungsmittels, so kann mittels der Messung der Lastgröße festgestellt werden, ob das Behandlungsmittel, insbesondere die Auflöseeinheit, bzw. die Arbeitsstelle sich im regulären Betrieb oder im Ansetzbetrieb befindet.

Insbesondere kann der Funktionsstatus des Antriebs ermittelt werden, an dem die Lastgröße gemessen wird. Die Lastgröße ist erfindungsgemäß ein Lastwinkel des zumindest einen Antriebs. Der Lastwinkel ist bei einem elektrischen Antrieb definiert als ein Winkel zwischen einem Statorfeld und einem Rotorfeld des Antriebs. Mittels der Messung der Lastgröße kann ein Verhalten des Antriebs ermittelt werden, so dass dieses genauer erfasst werden kann. Insbesondere kann die Lastgröße, nämlich der Lastwinkel, mit Hilfe eines Stroms, einer Spannung und/oder mittels der zeitlichen Verläufe des Stroms und/oder der Spannung des Antriebs ermittelt werden. Die Messung der Lastgröße kann damit insbesondere sensorlos durchgeführt werden. Die Messung der Lastgröße kann dadurch zuverlässig und präzise erfolgen.

Der Lastwinkel ist der Winkel zwischen dem Statorfeld und dem Rotorfeld des elektrischen Antriebs. Bei einem unbelasteten Antrieb beträgt der Lastwinkel 0°, wohingegen der Lastwinkel bei einer steigenden Last größer wird. Bei dem Lastwinkel von 0° sind das Statorfeld und das Rotorfeld antiparallel zueinander orientiert. Ist der Antrieb dagegen belastet, steigt der Lastwinkel, so dass daraus auf den Funktionsstatus geschlossen werden kann. Mit Hilfe des Lastwinkels können somit Rückschlüsse auf die am Antrieb angreifende Last gewonnen werden. Außerdem kann mittels einer Änderung des Lastwinkels auf Änderungen der Last am Antrieb geschlossen werden. Verklemmt sich beispielsweise der Antrieb der Arbeitsstelle, steigt der Lastwinkel. Aus diesen Informationen kann auf die Verklemmung geschlossen werden, so dass der Funktionsstatus ermittelt ist.

In einer vorteilhaften Weiterbildung der Erfindung wird die Lastgröße zumindest am Antrieb gemessen, der einem Behandlungsmittel in Form einer Auflöseeinheit, einem Spinnrotor, einer Changiereinrichtung, einem Abzugswalzenpaar, einer Spule und/oder einer Spulwalze zugeordnet ist. Dadurch können die Funktionsstatus der angetriebenen Behandlungsmittel der Arbeitsstelle ermittelt werden.

Von Vorteil ist es, wenn anhand der Messung der Lastgröße ein Blockieren, ein Verschleiß, eine Ausfallwahrscheinlichkeit, eine Lebensdauer und/oder ein Wartungsintervall eines Behandlungsmittels und/oder eines Antriebs ermittelt werden. Beispielsweise durch das Erkennen des Verschleißes kann ein Austausch des Behandlungsmittels geplant werden. Anhand der Ausfallwahrscheinlichkeit oder der Lebensdauer kann geplant werden, wieviel der Behandlungsmittel für einen zukünftigen Austausch bereitgehalten werden sollten. Anhand der Wartungsintervalle kann ein Wartungsplan der Arbeitsstelle und/oder der Textilmaschine geplant werden. Wenn der Verschleiß auftritt bzw. sich verstärkt, kann sich beispielsweise ein Behandlungsmittel schwergängiger bewegen, so dass der dem Behandlungsmittel zugeordneten Antrieb stärker belastet wird und die Lastgröße, nämlich der Lastwinkel, steigt. Anhand dieser Messung kann auf den Verschleiß geschlossen werden.

Zusätzlich oder alternativ kann anhand der Messung der Lastgröße eine Produktivität der Arbeitsstelle ermittelt werden. Dadurch können Produktionskosten für ein Endprodukt kalkuliert werden. Dadurch können beispielsweise Arbeitsstellen mit einer geringen Produktivität besonders behandelt werden, indem sie beispielsweise abgeschaltet oder intensiver gewartet werden. Weist die Arbeitsstelle eine hohe Produktivität auf, ist zumindest ein Antrieb höher belastet, so dass sich die Lastgröße ändert. Insbesondere sind, wenn die Arbeitsstelle eine hohe Produktivität aufweist, alle Antriebe der Arbeitsstelle gleichermaßen höher belastet, so dass daraus auf die erhöhte Produktivität geschlossen werden kann.

Zusätzlich oder alternativ kann anhand der Messung der Lastgröße die Anwesenheit des Fasermaterials in der Arbeitsstelle ermittelt werden. Wenn ein Antrieb des Behandlungsmittels oder mehrere, insbesondere alle, Antriebe der Behandlungsmittel der Arbeitsstelle unbelastet ist/sind, ist die Lastgröße bzw. die Lastgrößen der Antriebe beispielsweise in Form des Lastwinkels im Wesentlichen Null bzw. im Leerlauf der Antriebe zumindest wesentlich geringer als bei belasteten Antrieben, wobei dies ein Hinweis auf die Nicht-Anwesenheit bzw. der Abwesenheit des Fasermaterials sein kann. Beispielsweise kann es an garnproduzierenden Arbeitsstellen vorkommen, dass ein in einer Kanne bevorratetes Faserband zur Herstellung eines Garns zu Neige gegangen ist, so dass infolgedessen die Produktion von Garn unterbrochen ist, die Antriebe der Arbeitsstelle aber noch weiter die Behandlungsmittel betreiben. Ist das Fasermaterial erschöpft, kann dies anhand des kleineren Lastwinkels bzw. der abrupten Änderung des Lastwinkels erkannt werden und die Arbeitsstelle abgeschaltet und/oder eine entsprechende Mitteilung abgesetzt werden, um Energie einzusparen oder ein Betriebspersonal auf ein Nachfüllen des Fasermaterials aufmerksam zu machen. Zudem kann auch ein übermäßiger Verschleiß der leer laufenden Behandlungsmittel, insbesondere der Speisewalze, vermieden werden. Ebenso kann beim Anspinnen erkannt werden, ob ein Fasermaterial vorhanden ist und bei fehlendem Fasermaterial der Antrieb sowohl der Auflöseeinheit als auch der Speiseeinheit der Spinnstelle gestoppt werden. Hierdurch kann ein unnützer Anspinnvorgang vermieden werden.

Weiterhin ist es von Vorteil, wenn das Blockieren eines Behandlungsmittels vor Erreichen einer Endposition, einer Stoppposition und/oder einer Anschlagposition des Behandlungsmittels ermittelt wird. Da das Blockieren des Behandlungsmittels ein ähnlicher Zustand wie das Erreichen der Endposition, der Stoppposition und/oder der Anschlagposition ist, kann es vorteilhaft sein, das Blockieren vor dem Erreichen der entsprechenden Position zu erkennen, um es nicht mit dem Erreichen der Endposition, der Stoppposition und/oder mit der Anschlagposition zu verwechseln. Beispielsweise kann es sich bei dem Behandlungsmittel um eine Changiereinrichtung handeln, die zwischen zwei Endpositionen hin und her changiert. In den Endpositionen kehrt sich die Changierrichtung der Changiereinrichtung um, so dass in den Endpositionen eine spezifischer Verlauf bzw. Änderung der Lastgröße auftritt, der/die in beiden Endpositionen zumindest ähnlich ist. Aus einem Vergleich des Verhaltens der Lastgröße bei Blockierung und dem Verhalten der Lastgröße in den Endpositionen kann auf das Blockieren zwischen den Endpositionen geschlossen werden.

Vorteilhaft ist es ebenso, wenn ein Überschreiten der Lastgröße über einen Grenzwert erkannt wird. Dadurch kann der Antrieb vor Fehlfunktionen oder Beschädigungen, beispielsweise durch Überlastung, geschützt werden. Insbesondere kann für den Lastwinkel ein Grenzwert von 90° gewählt werden, da ab diesem Lastwinkel der Antrieb kippt und stehen bleiben kann. Zusätzlich oder alternativ kann auch ein Unterschreiten eines Grenzwerts der Lastgröße erkannt werden. Damit kann darauf geschlossen werden, dass eine Belastung des Antriebs unterschritten ist.

Ferner ist es von Vorteil, wenn aus der Messung der Lastgröße ein Lastgrö-βenprofil erstellt wird. Um das Lastgrößenprofil zu erstellen, kann die Lastgröße beispielsweise in einem Zeitintervall gegen die Zeit aufgetragen werden. Mittels eines Lastgrößenprofils, das in einem vergleichsweise geringen Zeitintervall, beispielsweise einigen Sekunden, den Lastgrößenverlauf beschreibt, können beispielsweise Änderungen im Funktionsstatus eines Behandlungsmittels erkannt werden, die relativ abrupt auftreten. Damit können beispielsweise Blockierungen erkannt werden, die im Wesentlichen innerhalb weniger Sekunden entstehen. Bei der Blockierung ändert sich die Lastgröße relativ schnell, so dass die Erstellung des Lastgrößenprofils in dem geringen Zeitintervall ausreicht. Wird das Lastgrößenprofil somit lediglich innerhalb weniger Sekunden erstellt, können derartige Fehler, wie Blockierungen oder das Fehlen des Fasermaterials, erkannt werden.

Zusätzlich oder alternativ kann das Lastgrößenprofil auch über einen längeren Zeitraum bzw. in einem längeren Zeitintervall erstellt werden. Die Länge des Zeitraums hängt dabei von der Art des Funktionsstatus ab, der ermittelt werden soll. Beispielsweise kann, wenn ein Verschleiß eines Behandlungsmittels erkannt werden soll, das Lastgrößenprofil über einen Zeitraum erstellt werden, bei dem der Verschleiß merkliche Auswirkungen auf die Lastgröße hat. Ein derartiger Zeitraum kann durchaus einige Tage bis Wochen betragen. Über diesen langen Zeitraum kann sich aufgrund des Verschleißes die Lastgröße verändern, was anhand des Lastgrößenprofils, das über mehrere Tage bis Wochen aufgenommen wurde, erkannt werden kann.

Das Lastgrößenprofil kann dabei kontinuierlich erstellt werden, so dass der Funktionsstatus des Behandlungsmittels und/oder des Antriebs lückenlos überwacht wird. Außerdem kann das Lastgrößenprofil auch in bestimmten Zeitintervallen erstellt werden, so dass ein Mess- und/oder Rechenaufwand für den Vergleich vergleichsweise gering ist.

Vorteilhaft ist es, wenn aus der Messung der Lastgröße wenigstens ein Referenzwert, vorzugsweise ein Referenzprofil, der Lastgröße des Antriebs erstellt wird. Es kann somit beispielsweise ein Referenzprofil des Spinnrotorantriebs erstellt werden. Das Referenzprofil kann über einen bestimmten Zeitraum aufgenommen werden. Das Referenzprofil wird vorzugsweise dann erstellt, wenn ein normaler Funktionsstatus, d.h. wenn keine Fehlfunktion o.ä., vorliegt. Das Referenzprofil gibt den Verlauf des Lastwinkels über die Zeit an. Mit Hilfe des Referenzwerts bzw. Referenzprofils ist ein Vergleich zu einem normalen Betrieb der Arbeitsstelle möglich. Ebenso kann, um beispielsweise das Vorhandensein des Fasermaterials zu erkennen, ein Referenzwert für die Lastgröße des Antriebs der Auflöseeinheit erstellt werden. Der Referenzwert kann ebenfalls dann erstellt werden, wenn ein normaler Funktionsstatus vorliegt, d.h. ein Fasermaterial an der Arbeitsstelle vorhanden ist.

Von Vorteil ist es, wenn der Referenzwert bzw. das Referenzprofil während einer ersten Startphase der Arbeitsstelle erstellt wird. Zusätzlich oder alternativ kann der Referenzwert oder das Referenzprofil auch während einer ersten Startphase des Antriebs und/oder des Behandlungsmittels erstellt werden. Die erste Startphase ist nach einer Fertigstellung der Arbeitsstelle, während alle Komponenten der Arbeitsstelle noch bestimmungsgemäß funktionieren, d.h. die Behandlungsmittel weisen im Allgemeinen keinen Verschleiß o.ä. auf und sind beispielsweise nicht blockiert. Die Arbeitsstelle weist somit noch keinen Verschleiß, keine Fehlfunktionen, die höchste Lebensdauer und die geringste Ausfallwahrscheinlichkeit auf. Ein währenddessen erstelltes Referenzprofil bildet somit den bevorzugten Funktionsstatus der Arbeitsstelle ab.

Einen Referenzwert während der ersten Startphase eines Behandlungsmittels zu erstellen, kann beispielsweise sinnvoll sein, um das Vorhandensein des Fasermaterials oder ggf. auch eines Fadens in dem Behandlungsmittel festzustellen. Beispielsweise kann ein Referenzwert für den Antrieb der Auflöseeinheit unmittelbar nach dem Beginn des Anspinnvorgangs erstellt werden, wenn die Faserspeisung noch nicht begonnen hat und sich die Auflöseeinheit somit noch im Leerlauf befindet, ohne Fasermaterial auszukämmen. Ggf. kann der Referenzwert sogar bereits während des Vorspeisens erstellt werden.

Der Referenzwert bzw. das Referenzprofil kann vorteilhafterweise mit der aktuell gemessenen Lastgröße bzw. dem aufgenommenen Lastgrößenprofil verglichen werden. Die aktuell gemessene Lastgröße bzw. das Lastgrößenprofil spiegelt dabei den aktuellen Funktionsstatus des Antriebs und/oder des Behandlungsmittels wieder. Mit Hilfe des Vergleichs des Lastgrößenprofils mit dem Referenzprofil können Unterschiede zwischen dem momentanen Funktionsstatus und dem Funktionsstatus, während eines Zeitpunkts, zum dem der Antrieb, das oder die Behandlungsmittel und/oder die Arbeitsstelle bestimmungsgemäß funktionierten, ermittelt werden. Liegt beispielsweise in o.g. Beispiel der Auflöseeinheit nach dem Start der Fasereinspeisung bzw. im laufenden Spinnbetrieb der aktuell gemessene Wert der Lastgröße über dem zuvor ermittelten Referenzwert, so wird davon ausgegangen, dass das Faserband vorhanden ist und das Anspinnen bzw. der reguläre Spinnprozess wird fortgesetzt. Wird hingegen festgestellt, dass der Wert der Lastgröße gleich dem zuvor ermittelten Referenzwert ist, so wird daraus auf das Fehlen des Faserbandes geschlossen und das Anspinnen abgebrochen bzw. im Falle einer laufenden Arbeitsstelle die betreffende Arbeitsstelle stillgesetzt.

Von Vorteil ist es auch, wenn ein Verlauf des Lastgrößenprofils des Antriebs mit einer momentanen Position des vom Antrieb angetriebenen Behandlungsmittels der Arbeitsstelle verglichen wird. Zusätzlich oder alternativ kann der Verlauf des Lastgrößenprofils des Antriebs auch mit einer momentanen Drehstellung des vom Antrieb angetriebenen Behandlungsmittels der Arbeitsstelle verglichen werden. Das angetriebene Behandlungsmittel der Arbeitsstelle kann beispielsweise die Changiereinrichtung sein, so dass mit Hilfe des Vergleichs des Verlaufs des Lastgrößenprofils mit der momentanen Position ein Versatz zwischen einer Soll-Position und einen Ist-Position der Changiereinrichtung erkannt werden kann. Der Verlauf des Lastgrößenprofils weist, wenn beispielsweise die Changiereinrichtung vom Antrieb angetrieben ist, insbesondere in Umkehrpunkten der Changiereinrichtung einen spezifischen Verlauf auf. Anhand eines Vergleichs einer momentanen Position der Changiereinrichtung kann auf einen Unterschied zwischen Soll- und Ist-Position geschlossen werden.

Des Weiteren ist es vorteilhaft, wenn die Lastgröße eines Antriebs einer ersten Arbeitsstelle mit der Lastgröße des entsprechenden Antriebs einer zweiten Arbeitsstelle verglichen wird. Zusätzlich oder alternativ kann auch das Lastgrößenprofil des Antriebs der ersten Arbeitsstelle mit dem Lastgrößenprofil des entsprechenden Antriebs der zweiten Arbeitsstelle verglichen werden. Es können somit beispielsweise die Lastgrößen und/oder das Lastgrö-βenprofile der Antriebe der Spinnrotoren der beiden Arbeitsstellen miteinander verglichen werden. Dadurch können die Funktionsstatus der beiden Arbeitsstellen verglichen werden. Beispielsweise kann damit erkannt werden, welcher der beiden Spinnrotoren der beiden Arbeitsstellen eine höhere Produktivität aufweist. Weist der Spinnrotor der ersten Arbeitsstelle beispielsweise eine höhere Produktivität als der Spinnrotor der zweiten Arbeitsstelle auf, ist der Antrieb des einen Spinnrotors stärker belastet als der Antrieb des anderen Spinnrotors. Dadurch sind die Lastgrößen der beiden den Spinnrotoren zugeordnete Antriebe unterschiedlich, so dass daraus auf die Produktivität der Arbeitsstellen bzw. den Unterschied der Produktivitäten der beiden Arbeitsstellen geschlossen werden kann. Ferner kann beispielsweise der Verschleiß der beiden Spinnrotoren erkannt werden, da die beiden Lastgrö-βen und/oder die Lastgrößenprofile in diesem Fall voneinander abweichen. Insbesondere kann die Abweichung der beiden Lastgrößen und/oder der Lastgrößenprofile der beiden Antriebe miteinander verglichen werden. Zusätzlich oder alternativ können auch die Antriebe von mehr als zwei Arbeitsstellen verglichen werden. Es können dabei lediglich die Antriebe miteinander verglichen werden, die einem bestimmten Behandlungsmittel zugeordnet sind. Beispielsweise können die Lastgrößen und/oder die Lastgrößenprofile eines Teils der Antriebe der Spinnrotoren der Textilmaschine oder gar die Lastgrößen und/oder die Lastgrößenprofile aller Antriebe der Spinnrotoren einer Textilmaschine miteinander verglichen werden. Dadurch kann beispielsweise ermittelt werden, welcher Spinnrotor die höchste Produktivität oder beispielsweise den geringsten Verschleiß aufweist. Sind beispielsweise alle Antriebe der ersten Arbeitsstelle höher belastet als alle Antriebe der zweiten Arbeitsstelle, kann dies ein Hinweis darauf sein, dass die erste Arbeitsstelle eine höhere Produktivität aufweist als die zweite Arbeitsstelle.

Von Vorteil ist es auch, wenn die Lastgröße zumindest eines ersten Antriebs einer Arbeitsstelle mit einer Lastgröße eines zweiten Antriebs derselben Arbeitsstelle verglichen wird. Zusätzlich oder alternativ kann auch das Lastgrö-βenprofil zumindest des ersten Antriebs der Arbeitsstelle mit dem Lastgrö-βenprofil des zweiten Antriebs derselben Arbeitsstelle verglichen werden. Die beiden Antriebe bzw. die mit den Antrieben betriebenen Behandlungsmittel können beispielsweise in einer Lieferrichtung eines Garns, insbesondere unmittelbar, hintereinander angeordnet sein. Dadurch kann beispielsweise eine Fehlfunktion ermittelt werden, die zwischen diesen beiden Antrieben auftritt. Zusätzlich oder alternativ können auch die Lastgrößen und/oder Lastgrößenprofile mehrerer Antriebe einer Arbeitsstelle miteinander verglichen werden.

Wenn die Lastgröße eines Antriebs statistisch ausgewertet wird, bringt dies ebenfalls Vorteile mit sich. Zusätzlich oder alternativ kann auch das Lastgrö-βenprofil statistisch ausgewertet werden. Beispielsweise kann aus einer kontinuierlichen, insbesondere stetigen, Änderung der Lastgröße und/oder des Lastgrößenprofil auf einen Verschleiß geschlossen werden, so dass die Änderung der Lastgröße gemessen werden kann. Es kann somit beispielsweise eine Steigung (positiv oder negativ) über die Zeit ermittelt werden. Dabei kann beispielsweise eine Standardabweichung, eine Varianz und/oder eine statistische Verteilung, insbesondere eine Gauß-Verteilung, der Lastgröße ausgewertet werden.

Vorteilhaft ist es, wenn ein Mittelwert der Lastgröße ermittelt wird. Zusätzlich oder alternativ kann auch eine Schwankung der Lastgröße ermittelt werden. Ebenfalls zusätzlich oder alternativ kann auch der Mittelwert und/oder die Schwankung des Lastgrößenprofils ermittelt werden. Als Mittelwert kann beispielsweise ein zeitlicher Mittelwert gebildet werden. Vorteilhaft ist es auch, wenn bei der Schwankung deren Periodizität ermittelt wird. Die periodische Schwankung der Lastgröße kann beispielsweise bei einem Antrieb auftreten, der ein Behandlungsmittel mit einer Unwucht antreibt.

Des Weiteren wird mit Hilfe einer Steuerung der Arbeitsstelle und/oder der Textilmaschine die Lastgröße gemessen. Zusätzlich oder alternativ können mit Hilfe der Steuerung auch der Funktionsstatus des Antriebs und/oder des Behandlungsmittels ermittelt werden. Die Steuerung kann vorzugsweise mit dem zumindest einen Antrieb verbunden sein, so dass die Steuerung den Antrieb steuern und die Lastgröße vom Antrieb erhalten oder selbst messen kann. In der Steuerung kann beispielsweise ein Auswertprogramm hinterlegt sein, das die Lastgröße, Änderungen der Lastgröße, das Referenzprofil und/oder das Lastgrößenprofil erstellt. Diese Daten können auch in der Steuerung in einem Speicher abgelegt werden oder bereits vorhanden sein. Die Steuerung kann die Lastgröße beispielsweise dadurch messen, dass diese einen Strom und/oder eine Spannung des Antriebs misst. Insbesondere kann die Steuerung die Lastgröße ermitteln, indem diese eine im Betrieb des Antriebs auftretende induzierte Spannung misst. Die Steuerung kann beispielsweise auch eine Phasenverschiebung zwischen dem Strom, der Spannung des Antriebs und der induzierten Spannung messen und daraus die Lastgröße ermitteln.

Vorgeschlagen wird des Weiteren eine Textilmaschine, insbesondere eine Offenend- oder Luftspinnmaschine, mit einer Vielzahl an Arbeitsstellen, die jeweils zumindest einen Antrieb aufweisen. Mit Hilfe des Antriebs kann zumindest ein dem Antrieb zugeordnetes Behandlungsmittel der jeweiligen Arbeitsstelle zum Behandeln eines Fasermaterials betrieben werden. Ist die Arbeitsstelle beispielsweise eine Spinnstelle, kann das Behandlungsmittel beispielsweise eine Auflöseeinheit, ein Spinnrotor, ein Abzugswalzenpaar, eine Changiereinrichtung und/oder eine Spulwalze sein.

Außerdem weist die Textilmaschine zumindest eine Steuerung auf, mit der zumindest ein Antrieb der Textilmaschine steuerbar ist. Zusätzlich oder alternativ kann auch eine Arbeitsstelle und/oder ein Gruppe von Arbeitsstellen die Steuerung aufweisen. Die Steuerung umfasst dabei Mittel, mit denen die Steuerung die Antriebe ansteuern kann. Die Steuerung kann auch eine Speichereinheit, um ein Steuerprogramm abzuspeichern, eine Recheneinheit, um Messwerte auszuwerten, und/oder zumindest eine Schnittstelle aufweisen, über die Steuerdaten und/oder Messdaten ausgetauscht werden können.

Erfindungsgemäß ist die Steuerung derart ausgebildet, dass die Textilmaschine nach einem Verfahren gemäß zumindest einem Merkmal der vorangegangenen und/oder nachfolgenden Beschreibung zu betreiben.

Weitere Vorteile der Erfindung sind in den nachfolgenden Ausführungsbeispielen beschrieben. Es zeigen:
- **Figur 1**: eine schematische Seitenansicht einer Arbeitsstelle einer Offenendspinnmaschine,
- **Figur 2a - c**: einen schematischen Querschnitt eines Antriebs mit Stator und Rotor, und
- **Figur 3**: eine schematische Vorderansicht einer Textilmaschine mit zwei Arbeitsstellen.

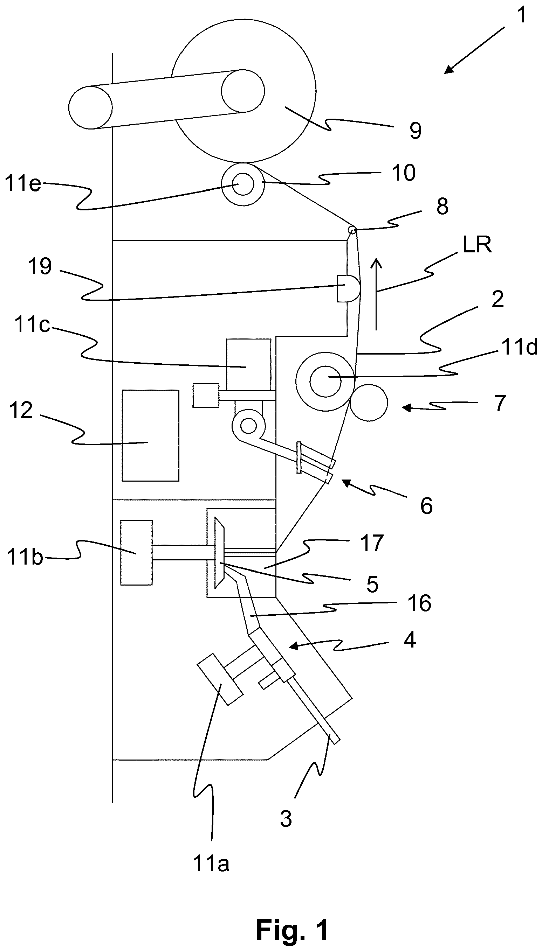

Figur 1 zeigt eine schematische Seitenansicht einer Arbeitsstelle 1 einer Textilmaschine 18. Die Textilmaschine 18 kann dabei eine Vielzahl an Arbeitsstellen 1 umfassen. Die Arbeitsstelle 1 ist im vorliegenden Ausführungsbeispiel als eine Spinnstelle ausgebildet. Die Spinnstelle kann ein Faserband 3erhalten und ein Garn 2 herstellen. Die in Figur 1 gezeigte Arbeitsstelle 1 stellt aus einem Faserband 3 das Garn 2 her. Das Garn 2 durchläuft in einer Lieferrichtung LR die Arbeitsstelle 1 und kann auf eine Spule 9 aufgewickelt werden.

Die Arbeitsstelle 1 des vorliegenden Ausführungsbeispiels weist eine Auflöseeinheit 4 auf, die aus dem Faserband 3 einzelne Fasern 16 auslöst. Die einzelnen Fasern 16 werden zu einem Spinnrotor 5 geführt, der aus den einzelnen Fasern 16 das Garn 2 herstellt. Der Spinnrotor 5 ist im vorliegenden Ausführungsbeispiel in einer Spinnbox 17 angeordnet. Das durch den Spinnrotor 5 gebildete Garn 2 wird mit Hilfe eines Abzugswalzenpaares 7 vom Spinnrotor 5 aus der Spinnbox 17 abgezogen, wobei das Garn 2 noch eine erste Changiereinrichtung 6 passieren kann, die das Garn 2 changiert. Mit Hilfe der ersten Changiereinrichtung 6 kann das Garn 2 zwischen dem Abzugswalzenpaar 7 changiert werden, um eine Abnutzung des Abzugswalzenpaars 7 zu vermindern bzw. hinauszuzögern. In Lieferrichtung LR dem Abzugswalzenpaar 7 nachgeordnet, weist die Arbeitsstelle 1 eine Umlenkeinheit 8 auf, die das Garn 2 zur Spule 9 umlenkt, auf der es aufgewickelt wird. In Lieferrichtung LR nach der Umlenkeinheit 8 weist die Arbeitsstelle 1 des vorliegenden Ausführungsbeispiels eine zweite Changiereinrichtung 20 auf, mittels der das Garn 2 zwischen der Umlenkeinheit 8 und der Spule 9 changiert werden kann. Mit Hilfe der zweiten Changiereinrichtung 20 kann das Garn 2 auf einer Breite der Spule 9 aufgewickelt werden. Die Spule 9 kann von einer Spulwalze 10 angetrieben werden, die an der Spule 9 anliegt und über Reibung zwischen der Spule 9 und der Spulwalze 10 die Spule 9 antreibt. Zusätzlich oder alternativ kann die Spule 9 auch selbst einen Antrieb aufweisen.

Zwischen dem Abzugswalzenpaar 7 und der Umlenkeinheit 8 ist im vorliegenden Ausführungsbeispiel ein Fadenwächter 19 angeordnet, mit dessen Hilfe eine Anwesenheit des Garns 2 überwacht werden kann.

Die Auflöseeinheit 4, der Spinnrotor 5, die erste Changiereinrichtung 6, das Abzugswalzenpaar 7, die Umlenkeinheit 8, die zweite Changiereinrichtung 20, die Spule 9, die Spulwalze 10 und der Fadenwächter 19 sind gemäß dem vorliegenden Ausführungsbeispiel Behandlungsmittel, mit denen das Fasermaterial in der Arbeitsstelle 1 verarbeitet wird. Dabei verändert beispielsweise die Auflöseeinheit 4 eine Form des Fasermaterials. Die Auflöseeinheit 4 löst aus einem Faserband 3 einzelne Fasern 16 aus. Der Spinnrotor 5 kann die einzelnen Fasern 16 zu einem Garn 2 verarbeiten. Die erste Changiereinrichtung 6 und/oder die zweite Changiereinrichtung 20 bewegt das Garn 2 seitlich zur Lieferrichtung LR. Das Abzugswalzenpaar 7 transportiert dagegen das Garn 2 in Lieferrichtung LR.

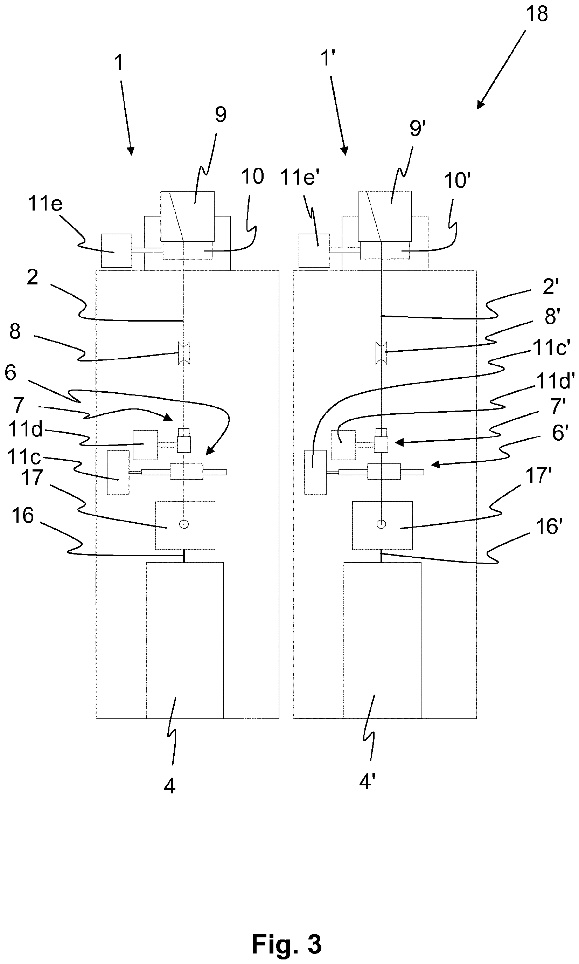

Des Weiteren weist die Arbeitsstelle 1 zumindest einen Antrieb 11 auf. Im vorliegenden Ausführungsbeispiel weist die Arbeitsstelle 1 mehrere Antriebe 11a - 11f auf, wobei den Behandlungsmitteln, die gemäß dem vorliegenden Ausführungsbeispiel die Auflöseeinheit 4, der Spinnrotor 5, die erste Changiereinrichtung 6, das Abzugswalzenpaar 7, die zweite Changiereinrichtung 20 und die Spulwalze 10 sind, jeweils ein Antrieb 11a - 11f (der zur zweiten Changiereinrichtung 20 zugeordnete Antrieb 11f ist in Figur 3 gezeigt) zugeordnet ist. Die Behandlungsmittel 4, 5, 6, 7, 10, 20 können somit einzeln und unabhängig voneinander mit Hilfe der zugeordneten Antriebe 11 a - 11f angetrieben werden.

Außerdem kann die Arbeitsstelle 1 vorteilhafterweise eine Steuerung 12 aufweisen, die mittels einer hier nicht gezeigten Verbindung mit dem zumindest einen Antriebe 11a - 11f verbunden sein kann, um diesen zu steuern und um dadurch den Herstellungsprozess des Garns 2 ausführen zu können.

Um einen Funktionsstatus der Arbeitsstelle 1 ermitteln zu können, wird erfindungsgemäß eine Lastgröße des zumindest einen Antriebs 11a - 11f der Arbeitsstelle 1 gemessen. Die Lastgröße ist erfindungsgemäß ein Lastwinkel α eines Antriebs 11a - 11f. Der Funktionsstatus kann beispielsweise eine Fehlfunktion, eine Blockierung, eine Produktivität, eine Lebensdauer, ein Verschleiß und/oder eine Ausfallwahrscheinlichkeit des Antriebs 11a - 11f und/oder eines Behandlungsmittels 4, 5, 6, 7, 10, 20 sein. Anhand des Funktionsstatus eines Antriebs 11a - 11f und/oder eines Behandlungsmittels 4, 5, 6, 7, 10, 20 kann auf den Funktionsstatus der Arbeitsstelle 1 geschlossen werden. Im Allgemeinen ist es so, dass eine Einschränkung beispielsweise eines Funktionsstatus eines Antriebs 11a - 11f und/oder eines Behandlungsmittels 4, 5, 6, 7, 10, 20 zu einer Einschränkung des Funktionsstatus der ganzen Arbeitsstelle 1 führt. Beispielsweise kann ein verlangsamtes Arbeiten der Auflöseeinheit 4 ein limitierender Faktor des Funktionsstatus der Arbeitsstelle 1 sein.

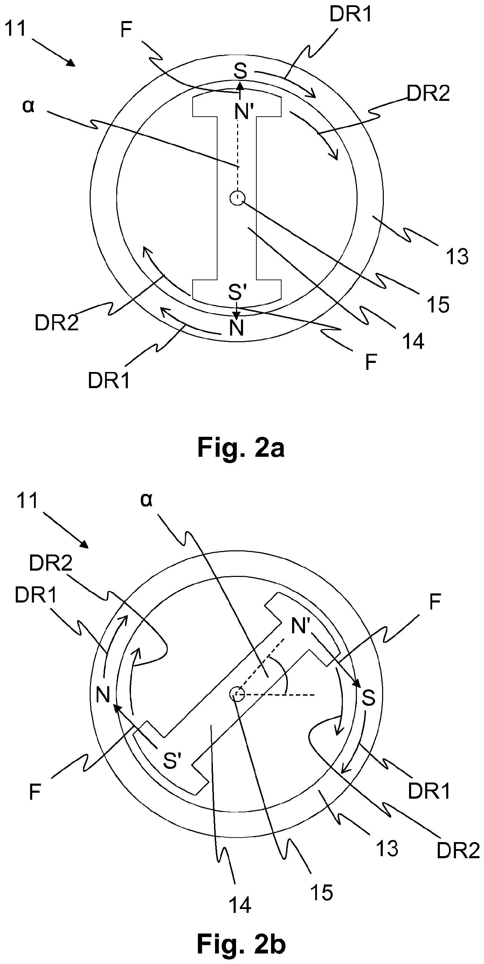

In den folgenden Figuren 2a - 2c wird der Lastwinkel α dargestellt. Der Lastwinkel α ist als Winkel zwischen einem Statorfeld und einem Rotorfeld N - S eines Elektromotors definiert. Die Antriebe 11a - 11f können somit elektrische Antriebe, insbesondere Elektromotoren, sein. Figuren 2a - c zeigen schematische Querschnitte eines elektrischen Antriebs 11 mit einem Stator 13 und einem Rotor 14. Gemäß den Figuren 2a - 2c ist der Rotor 14 um eine Drehachse 15 drehbar. Der Stator 13 bildet zumindest im Betrieb des Antriebs 11 das Statorfeld N - S aus, das beispielhaft im Stator 13 ausgebildet ist. Der Rotor 14 bildet ferner zumindest im Betrieb des Antriebs 11 das Rotorfeld N' - S` aus, das hier beispielhaft zwischen dem Nordpol N' des Rotorfelds N' - S` und dem Südpol S` des Rotorfelds N' - S' ausgebildet ist. Die beiden Felder beeinflussen sich gegenseitig, so dass der Antrieb 11 ein Drehmoment aufbringen kann.

Der Nordpol N sowie der Südpol S des Statorfelds N - S können sich beim Betrieb des Antriebs 11 in Drehrichtung DR1 drehen. Der Nordpol N und der Südpol S sind dabei stets um 180° zueinander versetzt angeordnet, so dass sie sich auch stets gleichartig in Drehrichtung DR1 bewegen. Infolgedessen ist an den beiden dem Nordpol N und dem Südpol S zugeordneten Pfeilen das gleiche Bezugszeichen DR1 zugeordnet.

Aufgrund einer magnetischen Kraft F zwischen dem Statorfeld N - S und dem Rotorfeld N' - S` kann mittels einer erzeugten Drehung des Statorfelds N - S in der Drehrichtung DR1 auch der Rotor 14 in Drehung versetzt werden. Die magnetische Kraft F ist dabei zwischen dem Südpol S und dem Nordpol N' sowie dem Nordpol N und dem Südpol S` ausgebildet. Der Rotor 14 dreht sich dann in der Drehrichtung DR2.

Dreht sich beispielsweise der in Figur 2a im oberen Abschnitt des Stators 13 angeordnete Südpol S des Statorfeldes N - S in Drehrichtung DR1, zieht er den Nordpol N' des Rotorfeldes N' - S` aufgrund der magnetischen Kraft F mit, so dass sich der Rotor 14 in Drehrichtung DR2 mitdreht. Gleiches gilt für den im unteren Abschnitt des Stators 13 angeordneten Nordpol N des Statorfeldes N - S. Der Nordpol N zieht den Südpol S` des Rotorfeldes N' - S' aufgrund der magnetischen Kraft F mit, so dass sich der Rotor 14 wieder in Drehrichtung DR2 mitdreht. Die Drehrichtung DR1 und die Drehrichtung DR2 sind in einem Normalbetrieb des Antriebs 11 stets gleich orientiert.

Im vorliegenden Ausführungsbeispiel der Figur 2a ist der Lastwinkel α zwischen dem Statorfeld N - S und dem Rotorfeld N' - S' 0°, da der Südpol S und der Nordpol N' sowie der Nordpol N und der Südpol S' zueinander nicht winkelversetzt sind. Dies ist im Betrieb des Antriebs 11 der Fall, wenn der Antrieb 11 unbelastet ist. Ohne Belastung kann der Rotor 14 stets dem drehenden Statorfeld N - S folgen.

In Figur 2b ist ein Beispiel gezeigt, bei dem der Antrieb 11 belastet ist. Auf den Antrieb 11 wirkt somit eine Last. Der Nordpol N und der Südpol S des Statorfeldes N - S sind gegenüber Figur 2a weiterrotiert. Das Statorfeld N - S eilt dem Rotorfeld N' - S' voraus. Da auf den Rotor 14 eine Last wirkt, hemmt diese die Rotation des Rotors 14. Die Last bremst den Rotor 14. Der Rotor 14 eilt dem Statorfeld N - S nach, so dass der Lastwinkel α nun im Bereich von ungefähr 45° liegt.

Der Lastwinkel α von ungefähr 45° bewirkt allerdings auch, dass die magnetische Kraft F und der Rotor 14 winklig zueinander sind, so dass aufgrund des Hebelgesetzes ein Drehmoment durch die magnetische Kraft F auf den Rotor 14 wirkt. Der Antrieb 11 kann die an ihm anliegende Last bewegen.

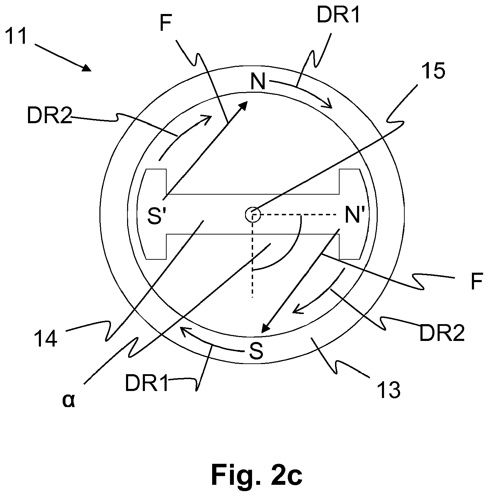

Figur 2c zeigt ein Ausführungsbeispiel, bei dem der Lastwinkel α ungefähr 90° beträgt. Das Rotorfeld N' - S' eilt dem Statorfeld N - S gegenüber dem Antrieb 11 gemäß der Figur 2b noch weiter nach. Bei einem derartigen Lastwinkel α kann ein maximales Drehmoment auf den Rotor 14 übertragen werden. Allerdings besteht bei dem Lastwinkel α von 90° die Gefahr, dass der Antrieb 11 kippt, wenn der Lastwinkel α größer als 90° wird. Dadurch kann der Antrieb 11 stehen bleiben, so dass die Arbeitsstelle 1 dadurch außer Betrieb gesetzt werden kann.

Mit Hilfe der Messung des Lastwinkels α kann ein Funktionsstatus eines Antriebs 11 und/oder eines Behandlungsmittels 4, 5, 6, 7, 10, 20 ermittelt werden. Wie oben erläutert, hängt der Lastwinkel α auch von der Last ab, mit der der Antrieb 11 beaufschlagt ist. Mittels der Messung des Lastwinkels α kann somit auf die Last geschlossen werden, die an dem Antrieb 11 und/oder am Behandlungsmittel 4, 5, 6, 7, 10, 20 anliegt. Anhand der Last und/oder einem zeitlichen Verlauf der Last kann auf den Funktionsstatus des Antriebs 11 und/oder dem mit dem Antrieb 11 angetriebenen Behandlungsmittel 4, 5, 6, 7, 10, 20 geschlossen werden.

Beispielsweise kann die Auflöseeinheit 4 blockieren, so dass der Rotor 14 sich nicht mehr dreht. Das Statorfeld N - S dreht sich noch weiter, so dass sich der Lastwinkel α ständig ändert. Die Änderung des Lastwinkels α ist dabei gleich mit der Drehfrequenz des Statorfeldes N - S. Wenn dies gemessen wird, kann darauf geschlossen werden, dass die Auflöseeinheit 4 blockiert und dieser Funktionsstatus vorliegt.

Beispielsweise kann auch eine Menge des auf der Spule 9 aufgewickelten Garns 2 als Funktionsstatus gemessen werden. Steigt die Menge des auf der Spule 9 aufgewickelten Garns 2, nimmt infolgedessen ein Trägheitsmoment der Spule 9 zu. Der Antrieb 11e der Spulwalze 10 wird dadurch immer mehr belastet, so dass auch der Lastwinkel α mit der Menge des Garns 2 auf der Spule 9 zunimmt. Dadurch kann die Menge des Garns 2 auf der Spule 9 als Funktionsstatus ermittelt werden. Dadurch kann insbesondere auch eine zeitliche Zunahme der Menge des Garns 2 auf der Spule 9 ermittelt werden. Dadurch kann beispielsweise auf eine Produktivität der Arbeitsstelle 1 geschlossen werden.

Vorteilhaft ist es, wenn aus der Messung der Lastgröße ein Referenzprofil der Lastgröße zumindest eines Antriebs 11a - 11f erstellt wird. Das Referenzprofil kann anschließend mit einem Lastgrößenprofil verglichen werden, dass während dem Betrieb der Arbeitsstelle 1 aufgenommen wird. Das Lastgrößenprofil kann über ein Zeitintervall stetig aufgenommen werden. Das Lastgrößenprofil kann Änderungen der Lastgröße und/oder die Größen der Lastgrößen umfassen. Das Lastgrößenprofil kann dabei auch statistisch ausgewertet werden.

Figur 3 zeigt eine Textilmaschine 18 mit zumindest zwei Arbeitsstellen 1, 1' in einer Vorderansicht. Die beiden Arbeitsstellen 1, 1' weisen untereinander sowie zur Figur 1 die gleichen Merkmale auf, so dass diese nicht weiter erklärt werden. Bei der Arbeitsstelle 1' sind die Elemente mit gestrichenen Bezugszeichen versehen.

Vorteilhafterweise kann die Lastgröße eines Antriebs 11a - 11f der ersten Arbeitsstelle 1 mit der Lastgröße des entsprechenden Antriebs 11a' - 11f' der zweiten Arbeitsstelle 1' verglichen werden. Beispielsweise kann die Lastgröße des Antriebs 11e der Spulwalze 10 mit der Lastgröße des Antriebs 11e' der Spulwalze 10' verglichen werden. Dadurch kann auf Unterschiede zwischen den Spulwalen 10, 10' bzw. zwischen den Spulen 9, 9` geschlossen werden.

Ferner können auch die Lastgrößen und/oder Lastgrößenprofile der hier nicht gezeigten Antriebe der Spinnrotoren gemessen werden. Dadurch kann beispielsweise auf einen Unterschied der Produktivität oder des Verschleißes der beiden Spinnrotoren ermittelt werden.

Die vorliegende Erfindung ist nicht auf die dargestellten und beschriebenen Ausführungsbeispiele beschränkt. Abwandlungen im Rahmen der Patentansprüche sind möglich.

### Bezugszeichenliste

- 1: Arbeitsstelle
- 2: Garn
- 3: Faserband
- 4: Auflöseeinheit
- 5: Spinnrotor
- 6: erste Changiereinrichtung
- 7: Abzugswalzenpaar
- 8: Umlenkeinheit
- 9: Spule
- 10: Spulwalze
- 11: Antrieb
- 12: Steuerung
- 13: Stator
- 14: Rotor
- 15: Drehachse
- 16: Fasern
- 17: Spinnbox
- 18: Textilmaschine
- 19: Fadenwächter
- 20: zweite Changiereinrichtung

- LR: Lieferrichtung
- α: Lastwinkel
- N: Nordpol
- S: Südpol
- N': Nordpol
- S': Südpol
- N - S: Statorfeld
- N' - S': Rotorfeld
- F: magnetische Kraft
- DR1: Drehrichtung des Statorfelds
- DR2: Drehrichtung des Rotorfelds

## Patentansprüche

1. Verfahren zum Ermitteln eines Funktionsstatus an einer Arbeitsstelle (1) einer Textilmaschine (18), insbesondere einer Offenend- oder Luftspinnmaschine,
wobei die Textilmaschine (18) eine Vielzahl an Arbeitsstellen (1) umfasst,
und wobei jeweils eine Arbeitsstelle (1) zumindest einen Antrieb (11) aufweist, mit dessen Hilfe zumindest ein dem Antrieb (11) zugeordnetes Behandlungsmittel (4, 5, 6, 7, 8, 9, 10, 19, 20) der jeweiligen Arbeitsstelle (1) zum Behandeln eines Fasermaterials (2, 3, 16) betrieben wird,
wobei anhand einer Messung einer Lastgröße des zumindest einen Antriebs (11) der Funktionsstatus zumindest eines Behandlungsmittels (4, 5, 6, 7, 8, 9, 10, 19, 20) und/oder zumindest eines Antriebs (11) der Arbeitsstelle (1) ermittelt wird, **dadurch gekennzeichnet, dass** mit Hilfe einer Steuerung (12) der Arbeitsstelle (1) und/oder der Textilmaschine (18) die Lastgröße gemessen wird, und dass die Lastgröße ein Lastwinkel (α) des zumindest einen Antriebs (11) ist.

2. Verfahren nach dem vorherigen Anspruch, **dadurch gekennzeichnet, dass** die Lastgröße zumindest an dem Antrieb (11) gemessen wird, der einem Behandlungsmittel (4, 5, 6, 7, 8, 9, 10, 19, 20) in Form einer Auflöseeinheit (4), eines Spinnrotors (5), einer Changiereinrichtung (6, 20), eines Abzugswalzenpaares (7), einer Spule (9) und/oder einer Spulwalze (10) der Arbeitsstelle (1) zugeordnet ist.

3. Verfahren nach zumindest einem der vorherigen Ansprüche, **dadurch gekennzeichnet, dass** anhand der Messung der Lastgröße ein Blockieren, ein Verschleiß, eine Ausfallwahrscheinlichkeit, eine Lebensdauer und/oder ein Wartungsintervall des Behandlungsmittels (4, 5, 6, 7, 8, 9, 10, 19, 20) und/oder des Antriebs (11)
und/oder eine Produktivität der Arbeitsstelle (1)
und/oder die Anwesenheit eines Fasermaterials (2, 3, 16) in der Arbeitsstelle (1)
und/oder eine Möglichkeit einer Behebung von Fehlerursachen ermittelt wird.

4. Verfahren nach zumindest einem der vorherigen Ansprüche, **dadurch gekennzeichnet, dass** das Blockieren eines Behandlungsmittels (4, 5, 6, 7, 8, 9, 10, 19, 20) vor Erreichen einer Endposition, einer Stoppposition und/oder einer Anschlagposition des Behandlungsmittels (4, 5, 6, 7, 8, 9, 10, 19, 20) ermittelt wird.

5. Verfahren nach zumindest einem der vorherigen Ansprüche, **dadurch gekennzeichnet, dass** ein Über- und/oder Unterschreiten eines Grenzwerts der Lastgröße überwacht wird.

6. Verfahren nach zumindest einem der vorherigen Ansprüche, **dadurch gekennzeichnet, dass** aus der Messung der Lastgröße ein Lastgrößenprofil erstellt wird.

7. Verfahren nach zumindest einem der vorherigen Ansprüche, **dadurch gekennzeichnet, dass** aus der Messung der Lastgröße wenigstens ein Referenzwert, insbesondere ein Referenzprofil, der Lastgröße des Antriebs (11) erstellt wird, wobei der Referenzwert, insbesondere das Referenzprofil, insbesondere während einer ersten Startphase der Arbeitsstelle (1) erstellt wird, und/oder dass der Referenzwert, insbesondere das Referenzprofil, mit der gemessenen Lastgröße, insbesondere dem Lastgrößenprofil, verglichen wird.

8. Verfahren nach zumindest einem der vorherigen Ansprüche, **dadurch gekennzeichnet, dass** ein Verlauf des Lastgrößenprofils des Antriebs (11) mit einer momentanen Position und/oder einer momentanen Drehstellung des vom Antrieb (11) betriebenen Behandlungsmittels (4, 5, 6, 7, 8, 9, 10, 19, 20) der Arbeitsstelle (1) verglichen wird.

9. Verfahren nach zumindest einem der vorherigen Ansprüche, **dadurch gekennzeichnet, dass** die Lastgröße und/oder das Lastgrößenprofil eines Antriebs (11) einer ersten Arbeitsstelle (1) mit der Lastgröße und/oder dem Lastgrößenprofil des entsprechenden Antriebs (11') einer zweiten Arbeitsstelle (1') verglichen wird.

10. Verfahren nach zumindest einem der vorherigen Ansprüche, **dadurch gekennzeichnet, dass** die Lastgröße und/oder das Lastgrößenprofil zumindest eines ersten Antriebs (11) einer Arbeitsstelle (1) mit einer Lastgröße und/oder einem Lastgrößenprofil eines zweiten Antriebs (11) derselben Arbeitsstelle (1) verglichen wird.

11. Verfahren nach zumindest einem der vorherigen Ansprüche, **dadurch gekennzeichnet, dass** die Lastgröße und/oder das Lastgrößenprofil eines Antriebs (11) statistisch ausgewertet wird.

12. Verfahren nach zumindest einem der vorherigen Ansprüche, **dadurch gekennzeichnet, dass** ein, insbesondere zeitlicher, Mittelwert und/oder eine, insbesondere periodische, Schwankung der Lastgröße und/oder des Lastgrößenprofils ermittelt wird.

13. Verfahren nach zumindest einem der vorherigen Ansprüche, **dadurch gekennzeichnet, dass** mit Hilfe der Steuerung (12) der Arbeitsstelle (1) und/oder der Textilmaschine (18) der Funktionsstatus der Arbeitsstelle (1) ermittelt wird.

14. Textilmaschine (18), insbesondere Offenend- oder Luftspinnmaschine, mit einer Vielzahl an Arbeitsstellen (1), die jeweils zumindest einen Antrieb (11) aufweisen, mit dessen Hilfe zumindest ein dem Antrieb (11) zugeordnetes Behandlungsmittel (4, 5, 6, 7, 8, 9, 10, 19, 20) der jeweiligen Arbeitsstelle (1) zum Behandeln eines Fasermaterials (2, 3, 16) betreibbar ist, und mit zumindest einer Steuerung (12), mit der zumindest ein Antrieb (11) der Textilmaschine (18) steuerbar ist,
**dadurch gekennzeichnet,**
**dass** die Steuerung (12) ausgebildet ist, die Textilmaschine (18) nach einem Verfahren gemäß zumindest einem der vorangegangenen Ansprüche zu betreiben.

## Claims

1. A method for determining a functional status at a workstation (1) of a textile machine (18), in particular an open-end or air-jet spinning machine, wherein the textile machine (18) comprises a plurality of workstations (1), and wherein a workstation (1) comprises at least one drive (11) in each case, with the aid of which at least one treatment means (4, 5, 6, 7, 8, 9, 10, 19, 20) of the particular workstation (1), which is associated with the drive (11), is operated for the purpose of treating a fiber material (2, 3, 16), wherein the functional status of at least one treatment means (4, 5, 6, 7, 8, 9, 10, 19, 20) and/or at least one drive (11) of the workstation (1) is determined on the basis of a measurement of a load variable of the at least one drive (11), **characterized in that**, the load variable is measured with the aid of a controller (12) of the workstation (1) and/or of the textile machine (18), and **in that** the load variable is a load angle (α) of the at least one drive (11).

2. The method as claimed in the preceding claim, **characterized in that** the load variable is measured at least at the drive (11), which is associated with a treatment means (4, 5, 6, 7, 8, 9, 10, 19, 20) in the form of an opening unit (4), a spinning rotor (5), a traversing device (6, 20), a pair of delivery rollers (7), a package (9), and/or a winding roller (10) of the workstation (1).

3. The method as claimed in at least one of the preceding claims, **characterized in that** a blockage, a case of wear, a failure probability, a service life, and/or a maintenance interval of the treatment means (4, 5, 6, 7, 8, 9, 10, 19, 20) and/or of the drive (11)
and/or a productivity of the workstation (1)
and/or the presence of a fiber material (2, 3, 16) in the workstation (1)
and/or a possibility of resolving causes of error are/is determined on the basis of the measurement of the load variable.

4. The method as claimed in at least one of the preceding claims, **characterized in that** the blockage of a treatment means (4, 5, 6, 7, 8, 9, 10, 19, 20) is determined before an end position, a stopping position, and/or a stop position of the treatment means (4, 5, 6, 7, 8, 9, 10, 19, 20) is reached.

5. The method as claimed in at least one of the preceding claims, **characterized in that** an exceedance and/or a falling below of a limiting value of the load variable is monitored.

6. The method as claimed in at least one of the preceding claims, **characterized in that** a load variable profile is created on the basis of the measurement of the load variable.

7. The method as claimed in at least one of the preceding claims, **characterized in that** at least one reference value, in particular a reference profile, of the load variable of the drive (11) is generated on the basis of the measurement of the load variable, wherein the reference value, in particular the reference profile, is generated, in particular during a first start phase of the workstation (1), and/or the reference value, in particular the reference profile, is compared with the measured load variable, in particular the load variable profile.

8. The method as claimed in at least one of the preceding claims, **characterized in that** a progression of the load variable profile of the drive (11) is compared with an instantaneous position and/or an instantaneous rotation position of the treatment means (4, 5, 6, 7, 8, 9, 10, 19, 20) of the workstation (1), which is operated by the drive (11).

9. The method as claimed in at least one of the preceding claims, **characterized in that** the load variable and/or the load variable profile of a drive (11) of a first workstation (1) are/is compared with the load variable and/or the load variable profile of the corresponding drive (11') of a second workstation (1').

10. The method as claimed in at least one of the preceding claims, **characterized in that** the load variable and/or the load variable profile of at least a first drive (11) of a workstation (1) are/is compared with a load variable and/or a load variable profile of a second drive (11) of the same workstation (1).

11. The method as claimed in at least one of the preceding claims, **characterized in that** the load variable and/or the load variable profile of a drive (11) are/is statistically evaluated.

12. The method as claimed in at least one of the preceding claims, **characterized in that** a mean value, in particular a time average, and/or an, in particular periodic, fluctuation of the load variable and/or of the load variable profile is determined.

13. The method as claimed in at least one of the preceding claims, **characterized in that** the functional status of the workstation (1) is determined with the aid of the controller (12) of the workstation (1) and/or of the textile machine (18).

14. A textile machine (18), in particular an open-end or air-jet spinning machine, comprising a plurality of workstations (1), which each include at least one drive (11), with the aid of which at least one treatment means (4, 5, 6, 7, 8, 9, 10, 19, 20) of the particular workstation (1), which is associated with the drive (11), can be operated for the purpose of treating a fiber material (2, 3, 16), and comprising at least one controller (12), with the aid of which at least one drive (11) of the textile machine (18) can be controlled, **characterized in that**
the controller (12) is designed for operating the textile machine (18) according to a method as claimed in at least one of the preceding claims.

## Revendications

1. Procédé pour déterminer un état de fonctionnement à un poste de travail (1) d'une machine textile (18), en particulier une machine de filature à bout libre ou à jet d'air,
dans lequel la machine textile (18) comprend une pluralité de postes de travail (1),
et dans lequel chaque poste de travail (1) présente au moins un entraînement (11) à l'aide duquel au moins un moyen de traitement (4, 5, 6, 7, 8, 9, 10, 19, 20) du poste de travail (1) respectif, associé à l'entraînement (11), est exploité pour traiter une matière fibreuse (2, 3, 16),
dans lequel l'état de fonctionnement d'au moins un moyen de traitement (4, 5, 6, 7, 8, 9, 10, 19, 20) et/ou d'au moins un entraînement (11) du poste de travail (1) est déterminé à l'aide d'une mesure d'une grandeur de charge de l'au moins un entraînement (11),
**caractérisé en ce que**
la grandeur de charge est mesurée à l'aide d'une commande (12) du poste de travail (1) et/ou de la machine textile (18), et **en ce que** la grandeur de charge est un angle de charge (α) de l'au moins un entraînement (11).

2. Procédé selon la revendication précédente, **caractérisé en ce que** la grandeur de charge est mesurée au moins sur l'entraînement (11) qui est associé à un moyen de traitement (4, 5, 6, 7, 8, 9, 10, 19, 20) sous la forme d'une unité d'ouvraison (4), d'un rotor de filage (5), d'un dispositif de va-et-vient (6, 20), d'une paire de cylindres dévideurs (7), d'une bobine (9) et/ou d'un rouleau bobineur (10) du poste de travail (1).

3. Procédé selon au moins l'une des revendications précédentes, **caractérisé en ce qu'**à l'aide de la mesure de la grandeur de charge, il est déterminé un blocage, une usure, une probabilité de défaillance, une durée de vie et/ou un intervalle de maintenance du moyen de traitement (4, 5, 6, 7, 8, 9, 10, 19, 20) et/ou de l'entraînement (11)
et/ou une productivité du poste de travail (1)
et/ou la présence d'une matière fibreuse (2, 3, 16) dans le poste de travail (1)
et/ou une possibilité d'élimination des causes de défaut.

4. Procédé selon au moins l'une des revendications précédentes, **caractérisé en ce que** le blocage d'un moyen de traitement (4, 5, 6, 7, 8, 9, 10, 19, 20) est déterminé avant l'arrivée à une position finale, une position d'arrêt et/ou une position de butée du moyen de traitement (4, 5, 6, 7, 8, 9, 10, 19, 20).

5. Procédé selon au moins l'une des revendications précédentes, caractérisé en ce qu'un écart vers le haut et/ou vers le bas par rapport à une valeur limite de la grandeur de charge est surveillé.

6. Procédé selon au moins l'une des revendications précédentes, caractérisé en ce qu'un profil de grandeur de charge est établi à partir de la mesure de la grandeur de charge.

7. Procédé selon au moins l'une des revendications précédentes, caractérisé en ce qu'au moins une valeur de référence, en particulier un profil de référence, de la grandeur de charge de l'entraînement (11) est établie à partir de la mesure de la grandeur de charge, dans lequel la valeur de référence, en particulier le profil de référence, est établie en particulier pendant une première phase de démarrage du poste de travail (1), et/ou en ce que la valeur de référence, en particulier le profil de référence, est comparée à la grandeur de charge mesurée, en particulier au profil de grandeur de charge.

8. Procédé selon au moins l'une des revendications précédentes, caractérisé en ce qu'une allure du profil de grandeur de charge de l'entraînement (11) est comparée à une position momentanée et/ou à une position de rotation momentanée du moyen de traitement (4, 5, 6, 7, 8, 9, 10, 19, 20) du poste de travail (1) entraîné par l'entraînement (11).

9. Procédé selon au moins l'une des revendications précédentes, **caractérisé en ce que** la grandeur de charge et/ou le profil de grandeur de charge d'un entraînement (11) d'un premier poste de travail (1) est/sont comparé(e/s) à la grandeur de charge et/ou au profil de grandeur de charge de l'entraînement (11') correspondant d'un deuxième poste de travail (1').

10. Procédé selon au moins l'une des revendications précédentes, **caractérisé en ce que** la grandeur de charge et/ou le profil de grandeur de charge d'au moins un premier entraînement (11) d'un poste de travail (1) est/sont comparé(e/s) à une grandeur de charge et/ou un profil de grandeur de charge d'un deuxième entraînement (11) du même poste de travail (1).

11. Procédé selon au moins l'une des revendications précédentes, **caractérisé en ce que** la grandeur de charge et/ou le profil de grandeur de charge d'un entraînement (11) est/sont évalué(e/s) statistiquement.

12. Procédé selon au moins l'une des revendications précédentes, caractérisé en ce qu'il est déterminé une valeur moyenne, en particulier temporelle, et/ou une fluctuation, en particulier périodique, de la grandeur de charge et/ou du profil de grandeur de charge.

13. Procédé selon au moins l'une des revendications précédentes, **caractérisé en ce que** l'état de fonctionnement du poste de travail (1) est déterminé à l'aide de la commande (12) du poste de travail (1) et/ou de la machine textile (18).

14. Machine textile (18), en particulier machine de filature à bout libre ou à jet d'air, avec une pluralité de postes e travail (1) qui présentent chacun au moins un entraînement (11), à l'aide duquel peut être exploité au moins un moyen de traitement (4, 5, 6, 7, 8, 9, 10, 19, 20) du poste de travail (1) respectif, associé à l'entraînement (11), pour traiter une matière fibreuse (2, 3, 16), et avec au moins une commande (12) à l'aide de laquelle peut être commandé au moins un entraînement (11) de la machine textile (18), **caractérisée en ce que** la commande (12) est conçue pour faire fonctionner la machine textile (18) selon un procédé selon au moins l'une des revendications précédentes.
